# FASCICULE DE BREVET EUROPEEN

(11) **EP 1 070 150 B1**
(45) Date de publication et mention de la délivrance du brevet: **30.07.2003**
(21) Numéro de dépôt: 99911902.7
(22) Date de dépôt: 08.04.1999
(51) Int. Cl.: C22B 7/02, C22B 3/12, C22B 19/30, C25C 1/16, C25C 7/02, C25B 9/00, B03B 9/04, B03B 7/00

(54) **PROCEDE DE TRAITEMENT DE POUSSIERES D'ACIERIES PAR VOIE HUMIDE**
NASSCHEMISCHES VERFAHREN ZUR AUFARBEITUNG VON STAHLWERKSTÄUBEN
METHOD FOR TREATING STEEL WORKS DUST BY WET PROCESS

(30) Priorité: 08.04.1998 FR 9804387
(43) Date de publication de la demande: 24.01.2001
(73) Titulaire: RECUPAC, 38570 Le Cheylas (FR)
(72) Inventeur: ROUX, Gilles, F-38210 Saint Quentin s/Isère (FR); TEDJAR, Farouk, F-38000 Grenoble (FR)
(74) Mandataire: Keib, Gérard
(86) Numéro de dépôt international: FR9900813
(87) Numéro de publication internationale: WO99053108

(56) Documents cités:
- EP-A- 0 420 525
- WO-A-97/06215
- DD-A- 283 423
- DE-A- 2 647 006
- FR-A- 2 362 669
- FR-A- 2 510 141
- FR-A- 2 579 998
- GB-A- 1 568 362
- US-A- 4 332 777
- US-A- 4 992 149
- DATABASE WPI Section Ch, Week 8325 Derwent Publications Ltd., London, GB; Class M13, AN 83-60413K XP002088699 & JP 58 081961 A (NIPPON LIGHT METAL CO) , 17 mai 1983
- PATENT ABSTRACTS OF JAPAN vol. 011, no. 124 (C-416), 17 avril 1987 & JP 61 261446 A (SUMITOMO METAL IND LTD;OTHERS: 01), 19 novembre 1986

## Description

L'invention se rapporte au domaine technique du traitement des poussières d'aciéries notamment d'aciéries électriques.

Selon un premier objet général, l'invention révèle un procédé et une installation de traitement desdites poussières permettant l'élimination des métaux lourds qu'elles contiennent.

Selon un deuxième objet général, l'invention révèle un procédé et une installation de traitement desdites poussières permettant une valorisation économique maximale de la fraction la plus abondante de ces poussières.

L'appellation métal lourd, entrée en usage dans de nombreuses législations, se rapporte à des métaux généralement :
- non dégradables au cours du temps ;
- toxiques pour les systèmes vivants à de très faibles concentrations ;
- enclins à s'accumuler dans les organismes vivants et à se concentrer au cours des transferts de matières dans les chaînes trophiques.

Les poussières d'aciéries, par exemple issues de la refusion au four électrique des ferrailles pour l'élaboration de l'acier, contiennent de tels métaux lourds tels que zinc, cadmium, plomb par exemple.

La production de poussières est comprise entre 15 et 22 Kg par tonne d'acier liquide.

A titre indicatif, la production d'acier, en Europe, a été de l'ordre de plus de 500 000 tonnes par an au début des années 90.

Par conséquent, il existe un besoin important de traitement efficace de ces poussières, dans un souci de protection de l'environnement notamment.

Plusieurs procédés ont été envisagés pour le traitement de ces poussières, les procédés variant suivant la composition desdites poussières.

On distingue deux grandes classes de poussières, suivant la nature des aciers élaborés, aciers au carbone et aciers alliés inoxydables.

Dans le cas des aciers au carbone, le zinc (17 à 29%) est présent dans les poussières sous deux formes : oxyde de zinc, ZnO et ferrite de zinc, ZnFe₂O₄ alors que le plomb (4 à 5%) est sous forme d'oxyde (PbO). Les teneurs en cadmium sont plus faibles, de l'ordre de 800 ppm environ.

Contrairement à l'oxyde de zinc, les ferrites de zinc sont difficilement solubles lors des traitements hydrométallurgiques pour libérer le zinc.

Pour les aciers alliés et inoxydables, la quantité de poussières générées en Europe a été d'environ 50 000 tonnes par an dans les années 90.

Différentes filières et procédés, pour beaucoup restés au stade de pilote de laboratoire, ont été imaginés pour le traitement des poussières d'aciéries, notamment électriques.

La filière BUS (BERZELIUS UMWELT) propose un traitement des poussières d'aciéries pour les aciers au carbone combinant deux procédés : le procédé WAELZ et le procédé ISP (IMPERIAL SMELTING PROCESS). Cette filière met en oeuvre un procédé pyrométallurgique classique et une condensation des vapeurs de zinc par condenseur à pulvérisation de plomb liquide.

Le procédé FLAME REACTOR, mis en oeuvre pour le traitement des poussières d'aciers alliés et inoxydables, consiste essentiellement en un cyclonage vertical de réduction -fusion à flammes. Les déchets riches en zinc et en plomb sont transformés en laitier à refondre et en oxyde à valoriser.

Le procédé PLASMADUST, est utilisé depuis les années 1980 pour le traitement des poussières d'aciéries électriques riches en zinc et en plomb. Le four de traitement est du type four à cuves, dont l'énergie est apportée par des torches à plasma d'arc soufflé. L'énergie du plasma est utilisée pour chauffer les réactifs, et pour apporter la chaleur nécessaire aux réactions endothermiques de réduction. Le gaz plasmagène est introduit dans le four par des tuyères en cuivre refroidies à l'eau. La charge pulvérulente composée de poussières, de fondant et de charbon, est injectée dans les tuyères et mélangée au gaz plasmagène. Les fumées chargées en vapeurs métalliques quittent le four à une température d'environ 1150 °C.

Lorsque le procédé PLASMADUST est employé pour les poussières d'aciers alliés et inoxydables, la teneur en zinc dans les fumées est généralement trop faible pour que la condensation du zinc soit efficace, le zinc étant en ce cas récupéré dans la boue issue des laveurs.

Le procédé PLASMINOX met en oeuvre un traitement par torches à plasma à cathode chaude fonctionnant en arc transféré à courant continu et implantée verticalement sur le four. Dans le four, les métaux présents -chrome, nickel, molybdène et fer- sont séparés des poussières par fusion et le ferro-alliage qui en résulte est coulé en lingotières pour réenfoumement ultérieur à l'aciérie productrice de poussières. Les scories obtenues sont, conformément aux normes, inertes. Les fumées s'échappant du four sont refroidies et dépoussiérées. Les poussières secondaires obtenues contiennent des métaux volatils Zₙ, P_{b} sous forme d'oxydes et ne sont pas valorisés.

Le procédé ZINCEX modifié produit du zinc par voie hydrométallurgique, ce procédé comportant les étapes successives suivantes :
- lixiviation atmosphérique des poussières par une solution d'acide sulfurique diluée ;
- purification de la liqueur de lixiviation par précipitation du fer et de l'aluminium ;
- extraction sélective du zinc par D2EHPA ;
- stripping du zinc de la phase organique par la solution électrolytique fortement acide ;
- électrodéposition du zinc sur des cathodes en aluminium.

Le procédé ZINCEX est relativement complexe dans sa mise en oeuvre dans la mesure où il fait appel à des solvants organiques associés à de l'acide sulfurique. Par ailleurs, ce procédé nécessite de grandes quantités d'eau de lavage pour éviter la formation de SO₂ à partir des oxydes qui sont recyclés dans le four. Ce procédé ZINCEX est difficilement exportable, en raison des problèmes susmentionnés et dans la mesure où il implique des investissements trop lourds.

Le procédé GLASSIFICATION comprend une étape de mélange des poussières d'aciéries avec d'autres déchêts d'aciéries et des constituants de verre. Le mélange est fondu dans un four à arc submergé. Les métaux volatilisés durant la fusion se condensent dans la partie haute du four avant d'être piégés dans le bain de verre. Le verre obtenu peut être mis sous forme de granulés pour la fabrication de tuiles, de grenailles de verre.

Au total, trois grandes voies de recyclage ont été envisagées pour le recyclage des poussières d'aciéries électriques.

Une première voie consiste à effectuer des réductions à des températures diverses selon les procédés pour volatiliser les métaux lourds et réinjecter la fraction ferreuse dans les fours de production de l'acier :
- le document EP 336 923 propose de traiter les poussières d'aciéries dans un four à fusion de fonte après transformation en boulettes ;
- le document EP 441 052 propose un traitement thermique entre 1200 et 1700 °C par addition de produits réducteurs ;
- le document WO 91/12 210 décrit un procédé de traitement des poussières d'aciéries dans un four de réduction de fontes, les métaux lourds étant récupérés par condensation à partir des gaz chauds ;
- le document EP 453 151 décrit un procédé de traitement des poussières sous forme de boulettes par un agent sélectivement réducteur de l'oxyde de fer ;
- le document FR 2 666 592 décrit un dispositif d'extraction des métaux volatils agissant par oxydation ;
- le document WO 93/69 619 décrit un four à arc spécialement conçu pour la réduction des poussières contenant des oxydes;
- le document EP 551 992 décrit un procédé de récupération des métaux vaiorisables à partir de poussières d'aciéries par réduction et volatilisation des métaux valorisabfes ;
- le document FR 2 373 612 décrit un procédé d'extraction du zinc contenu dans les poussières d'aciéries, par oxydation sélective à chaud.

Une seconde voie consiste à orienter les poussières vers une utilisation où elles seraient "inertées" par des moyens divers en vue de l'utilisation comme matériaux de construction ou d'appoint :
- le document EP 402 746 propose un recyclage par intégration dans une argile pour un matériau de remblai de mines ;
- le document WO 91/12 210 propose l'utilisation des poussières d'aciéries pour le traitement des eaux d'égouts moyennant l'addition d'un agent flocutant ;
- le document FR 2 689 881 décrit un procédé de fabrication de briques dont les propriétés sont améliorées par addition de poussières d'aciéries électriques préalablement calcinées à la température de volatilisation de métaux lourds contenus dans lesdites poussières ;
- le document FR 2 700 161 décrit un mélange pour tapis routier comprenant de 2 à 6 % en poids de poussières de filtres d'aciéries électriques.

Les procédés pyrométallurgiques, avec ou sans électricité permettent la valorisation d'oxydes de zinc, de fer ou alliage chrome nickel, de zinc liquide par condensation le plus souvent.

Une troisième voie, hydrométallurgique, a été également envisagée.

Divers milieux comme l'acide sulfurique, l'acide chlorhydrique, la soude et l'ammoniac ont été expérimentés.

Le document FR 2 716 895 décrit un procédé de traitement des poussières d'aciéries électriques avec ou sans réduction préalable, ou des poussières d'électrozingage. Ledit procédé comprend une attaque amoniacale par une solution tampon amoniacale, puis une désorption de l'amoniac par un balayage de flux d'air.

Les attaques directes en milieu sulfurique et chlorhydrique ne sont pas économiquement viables, dans la mesure où les volumes en sels ou hydroxyde de fer mis en jeu sont énormes.

Ces résidus sont d'ailleurs toujours contaminés par les impuretés métalliques comme le plomb et le cadmium.

Des lixiviations alcalines ont été proposées.

Le document FR 2 535 736 décrit un procédé de traitement des poussières contenant du zinc, issues de fours d'aciéries électriques, dans lequel on soumet les poussières à une lixiviation basique. Les rejets basiques résultant des différentes phases de lavage et contenant du zinc sont neutralisés au moyen des rejets acides provenant d'opérations de galvanisation et contenant également du zinc.

Le document FR 2 501 141 décrit une lixiviation basique de poussières zincifères au moyen de chlorure d'ammonium, la poudre obtenue étant agglomérée et introduite dans un four de fusion.

Par la technique de lixiviation, seuls les éléments sous forme d'oxydes libres (zinc, plomb principalement) sont dissous. Les oxydes mixtes métaux non ferreux -oxydes de fer ne sont pas atteints. Leur gestion est donc problématique, y compris la réinjection dans le four d'aciérie qui conduit, à terme, à un problème de reconcentration des impuretés.

Les procédés associant l'ammoniaque à des sels d'ammonium (notamment le procédé ENGITEC décrit dans la demande de brevet européen EP-93 00018.5) présentent des inconvénients dans les manipulations des chlorures pour la récupération des éléments minoritaires (zinc, plomb et cadmium) et la valorisation des oxydes de fer. La forte teneur en chlorure empêche un recyclage de ces phases dans les fours en raison des problèmes liés au chlore. Leur lavage exigerait des volumes d'eau considérables.

On peut donc penser que ce type de procédé présente un rendement maximum compris entre 25 et 30%, proportionnel à la concentration en phase non ferreuse. Ce procédé génère donc un déchet dont la gestion reste aussi problématique que celle des poussières brutes.

Le document FR 2 737 503 décrit un procédé de préparation de pigments minéraux ainsi que les pigments minéraux ainsi obtenus et une installation pour la mise en oeuvre d'un tel procédé. Ce document, issu de la demanderesse, décrit un procédé comportant les étapes suivantes :
- séparation des poussières en deux fractions, une fraction comportant des éléments magnétiques et une fraction comportant des éléments non magnétiques ;
- lixiviation basique de la fraction non magnétique pour dissoudre la fraction de zinc qui ne serait pas engagée sous forme de spinelle, et la silice, le plomb, une fraction du manganèse ;
- rinçage jusqu'à neutralisation et séparation de la charge ainsi obtenue ;
- calcination à une température comprise entre 450 et 650°C de la charge ainsi obtenue ;
- traitement de la charge calcinée à l'acide sulfurique en présence d'un catalyseur de dissolution des oxydes de fer formés lors de l'étape de calcination et des métaux lourds autres que le zinc ;
- recueil des pigments minéraux ;
- utilisation des solutions issues du rinçage et du traitement par l'acide sulfurique pour précipiter d'autres pigments.

La présente invention propose un procédé de neutralisation des métaux lourds libres contenus dans les poussières d'aciéries, notamment électriques, procédé qui permet également la valorisation de la fraction la plus abondante desdites poussières.

Le procédé selon l'invention permet de traiter indistinctement les poussières dites acides et les poussières dites basiques.

Le procédé selon l'invention permet de dissocier géographiquement un prétraitement des poussières au site de captation et un traitement chimique et une valorisation desdites poussières.

Le procédé selon l'invention est particulièrement adapté au traitement des poussières d'aciers au carbone et d'aciers à outils.

L'invention se rapporte, selon un premier aspect, à un procédé de traitement de poussières d'aciéries en vue de la récupération des éléments valorisables, ledit procédé comportant une attrition dans l'eau suivie d'un classement hydraulique de la charge ainsi obtenue ledit procédé étant caractérisé en ce qu'il comporte en outre :
- un lavage de la charge recueillie à la surverse issue du classement hydraulique, ladite charge étant chargée de sels et métaux lourds dissous, en vue de séparer les fractions salines hydrosolubles des oxydes insolubles,
- un traitement à chaud de la totalité de la charge, lavée dans l'étape de lavage précédente sans séparation magnétique préalable, en vue d'éliminer les métaux sous forme d'oxydes libres comme le zinc et le plomb,
- un traitement par voie thermique de la charge obtenue après traitement à chaud à une température comprise entre 240 et 800°C.

Le procédé présente en outre les aspects suivants, éventuellement combinés.

Une étape de traitement par de l'acide sulfurique de concentration comprise entre 5 et 8% est réalisée après le traitement par voie thermique.

Le traitement à chaud effectué après l'étape de lavage est, selon une première variante, réalisé en milieu acide. Ledit milieu acide est, dans une réalisation, une solution d'acide sulfurique à une concentration comprise entre 8 et 18 % et une température comprise entre 40 et 95°C.

Le traitement à chaud est suivi d'une oxydation puis d'une séparation du fer sous forme d'un précipité d'oxyde insoluble.

Le zinc est séparé au moyen d'une électrolyse acide.

Le traitement à chaud effectué après l'étape de lavage est, selon une deuxième variante, réalisé en milieu alcalin.

Selon une réalisation, le lavage comporte un traitement par un dérivé soufré choisi parmi le groupe des hétérocycles tel que le triméthyle triazine ou le 2,5 dimercapto thiadiazole.

Le traitement alcalin est effectué dans une solution de soude concentrée à chaud en présence d'un agent oxydant.

La concentration de la solution de soude est comprise entre 240 et 400 g/l.

La température du traitement alcalin est comprise entre 50 et 110°C.

L'agent oxydant est choisi parmi les composés oxydants en milieu alcalin tel que le peroxyde d'hydrogène.

La concentration de peroxyde d'hydrogène est comprise entre 10 et 40%, et plus particulièrement entre 30 et 35 %. Le plomb contenu dans la solution alcaline est éliminé au moyen de peroxyde d'hydrogène de concentration égale au minimum à 35 % en poids.

Le traitement par voie thermique est effectué entre 400 et 650°C.

Le traitement par de l'acide sulfurique est réalisé en présence d'une injection d'air pour oxyder le fer divalent en fer trivalent.

Le traitement à l'acide sulfurique est réalisé à chaud à une température comprise entre 40 et 80°C.

La solution issue de l'attaque acide est ajustée à un pH compris entre 5,4 et 10.

La solution issue de l'attaque acide est ajustée à une température comprise entre 25 et 80°C.

La solution issue du traitement acide est purifiée au moyen de poudres de zinc ou de fer.

Le procédé comporte en outre une électrolyse en deux étapes de la solution issue du traitement alcalin.

Ladite première électrolyse met en oeuvre une cathode de graphite en grains contenus dans un panier en contact avec une grille en titane.

Le panier est réalisé en polypropylène.

L'anode est en titane ruthénié ou iridié.

La seconde électrolyse comporte une redissolution anodique des cathodes de graphite dans une solution de sulfate de sodium et une redéposition cathodique du zinc sur une électrode en fer ou en acier.

La seconde électrolyse est réalisée dans un électrolyseur dont le pH est ajusté à une valeur voisine de 5.

D'autres objets et avantages de l'invention apparaîtront au cours de la description suivante de modes de réalisation, description qui va être faite en se référant aux figures annexées dans lesquelles :

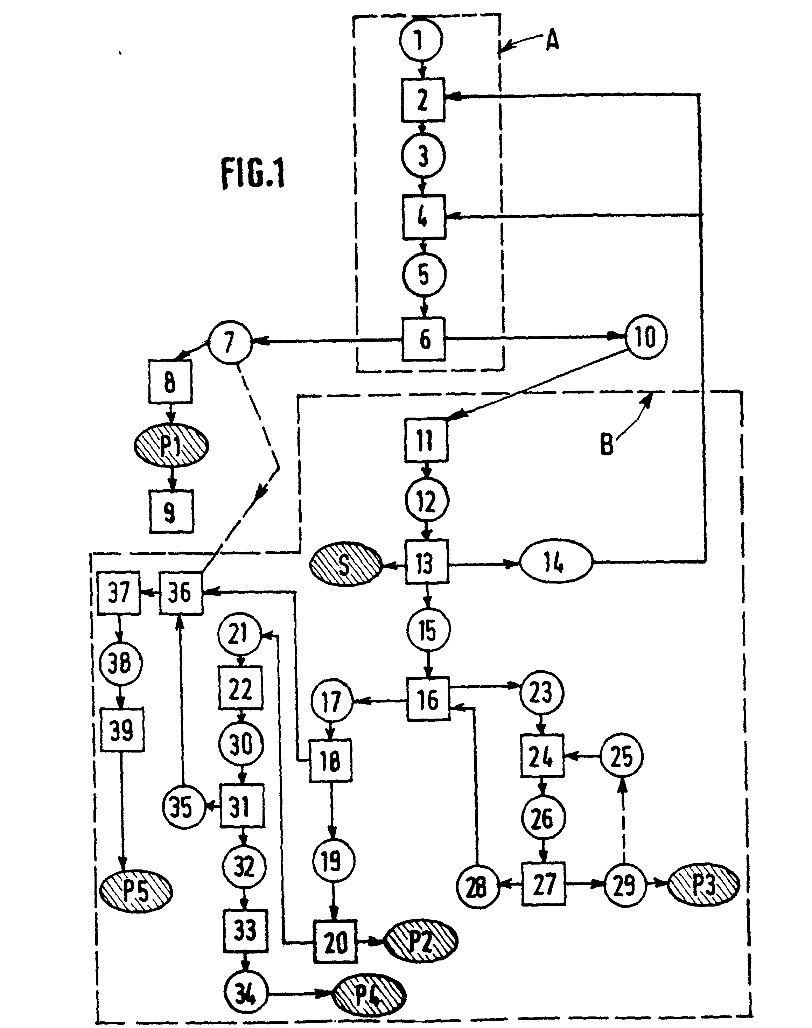

- la figure 1 est un diagramme schématique représentant les étapes du procédé, selon un mode de réalisation, les références numériques contenues dans un cercle correspondant aux produits intermédiaires obtenus au cours du procédé, les produits finaux étant notamment les produits P1, P2, P3, P4, P5 et S;
- la figure 2 est un diagramme schématique montrant une configuration à plusieurs sous-unités A de prétraitement des poussières d'aciéries, associée à une seule sous unité de traitement physicochimique B des fines issues du prétraitement ;

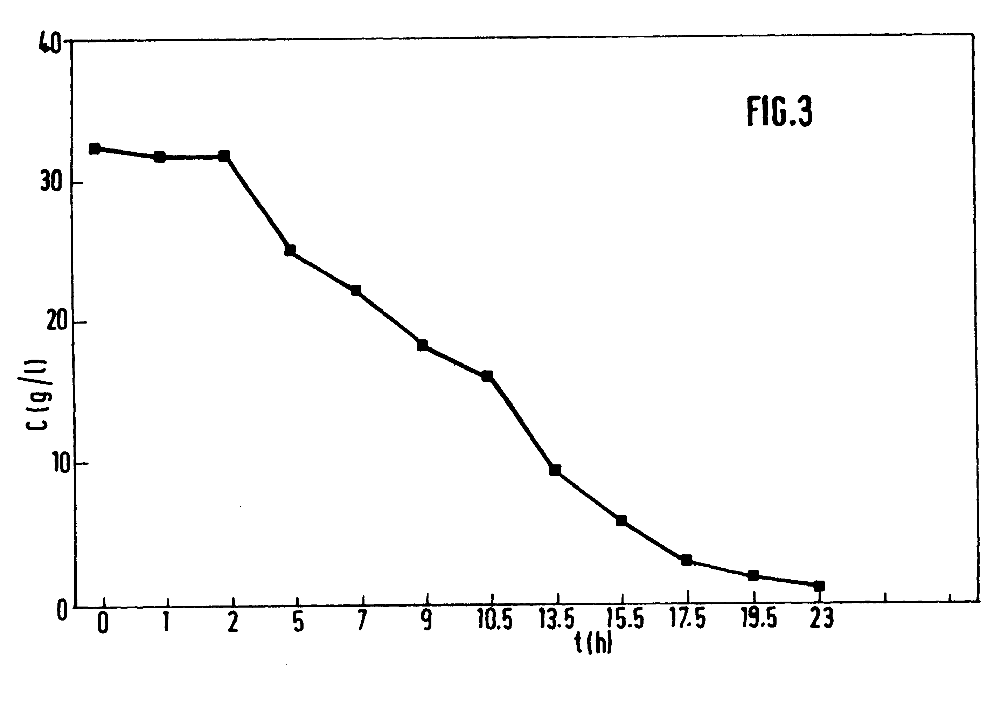

- la figure 3 est un graphique représentant les variations de la concentration en zinc au cours du temps, lors d'une électrolyse d'une solution sous 80A et 3V la concentration C en zinc, en gramme par litre de solution est donnée en ordonnée, le temps t en heures étant en abcisses.

Quelques données techniques générales sont tout d'abord présentées avant de décrire l'invention dans différents modes de réalisation.

Les poussières d'aciéries résultent au minimum de deux réactions.

Les métaux les plus volatils passent en phase vapeur à la température de fonctionnement des fours. Sous l'effet de l'aspiration à l'air, ces métaux volatils sont alors oxydés et refroidis et se retrouvent soit sous forme d'oxydes libres, soit sous forme de structures mixtes avec les oxydes de fer.

Au dessus du bain d'acier en fusion, de fines particules de fer sont dispersées dans la phase vapeur et entraînées par l'aspiration d'air. Dans ce courant d'air, elles sont refroidies et, sous l'action de l'oxygène de l'air, transformées en oxydes supérieurs.

L'interaction entre ces oxydes et les métaux lourds peut conduire à la formation de composés type spinelles MFe₂O₄ (M = zinc, nickel, manganèse ou cadmium). Si M est le fer, la phase est composée de magnétite.

Les poussières d'aciéries électriques contiennent donc des quantités variables en éléments majoritaires type fer, zinc, calcium et silicium sous forme d'oxydes simples ou mixtes et des éléments minoritaires comme le cuivre, le manganèse, le chrome, le cadmium, le plomb et les chlorures.

Les poussières sont considérées comme toxiques en raison du relargage des métaux lourds par lixiviation et relèvent donc des décharges de classe 1.

A ce propos, la réglementation en France prévoit qu'à partir de 2002, seuls les déchets réputés et confirmés ultimes seront admis dans les décharges de classe 1.

Les poussières d'aciéries électriques ont des distributions granulométriques très larges puisqu'elles renferment des fractions comprises entre 0,1 et 150 microns.

Ces poussières ont d'ailleurs une forte tendance à s'agglomérer.

Cette propriété exclut toute possibilité de tamisage à sec y compris assistée par ultra-sons.

L'étude granulométrique des poussières d'aciéries électriques montre que la composition chimique des fractions dépend fortement de la granulométrie.

Ainsi, les fractions les plus grosses sont les plus riches en fer métal.

Comme les poussières résultent également d'agglomération physique de particules de faible taille autour d'un grain central plus gros, seule une attrition dans l'eau permet de désagréger les agglomérats. Ceci facilite avantageusement la séparation de la charge en deux fractions (supérieures ou inférieures à 40 microns par exemple).

L'opération d'attrition revêt une grande importance dans la mesure où elle permet :
- d'accélérer la dissolution des sels solubles ;
- de révéler les fractions métalliques qui sont masquées par les oxydes absorbés en surface.

Le procédé de traitement de poussières d'aciéries selon l'invention comprend au préalable une attrition dans l'eau de poussières brutes 1.

Le rapport solide/liquide doit être judicieusement choisi pour mettre une friction convenable entre les particules solides tout en offrant un volume suffisant pour assurer la dissolution des fractions solubles.

Un rapport solide/liquide compris entre 2,3 et 2,5 est à cet égard satisfaisant.

Après l'opération d'attrition 2, la charge 3 est diluée (opération 4) suffisamment pour achever la dissolution des sels, mettre en suspension les particules très fines, et assurer une densité de pulpe 5 adaptée à une classification hydraulique 6.

La classification hydraulique 6 est avantageusement effectuée dans des hydrocyclones de coupures adaptées à la granulométrie de la poussière entrante.

Les hydrocyclones fonctionnent en régime continu et sont essentiellement constitués par un cylindre vertical où a lieu la séparation, muni à sa base d'un cône de récupération du solide, fermé par une surface horizontale à sa partie supérieure.

La pulpe 5 est introduite tangentiellement dans la partie supérieure du cylindre avec une vitesse élevée.

La charge recueillie à la sous-verse 7 des cyclones est riche en carbone, fer et magnétite. Cette charge est décantée, essorée (opérations référencées sous le N° 8) et le produit P1 obtenu peut être réinjecté dans les fours d'élaboration 9 d'acier.

La charge recueillie à la surverse 10 est chargée de sels et de métaux lourds dissous.

La charge issue de la séparation solide-liquide est alors traitée en 11 par un dérivé soufré choisi parmi les hétérocycles tels que le trimétyle triazine (TMT) ou le 2,5 dimercapto thiadiazole (DMT) pour éliminer tous les métaux lourds en solution sans minéralisation supplémentaire.

La solution saline obtenue 12 est alors soumise à une concentration en 13 pour récupérer les sels S et recycler l'eau 14 ainsi purifiée.

Cette étape de concentration 13 est conduite par évaporation, cristallisation ou concentration sur membrane.

Selon une première variante, la charge 15 issue de l'étape de concentration est soumise à un traitement acide.

Ainsi, par exemple, 50 kg de poussières issues du lavage sont attaquées par une solution d'acide suffurique à 15% et à une température de 80°C pendant 3 heures.

Après filtration et séparation du résidu insoluble, le pH de la solution est ramené à une valeur de 3,8 au moyen de poudre de fer, puis cette solution est oxydée au moyen d'eau oxygénée dans un rapport stoechéométrique par rapport au fer. Un précipite rouge-orangé apparaît.

La suspension obtenue est chauffée à 90°C pendant une heure, puis filtrée et le solide séparé est lavé à contre courant dans un filtre-presse.

La solution obtenue par filtration contient une concentration en fer inférieure à 1 mg/l et environ 18g/l de zinc. Elle est soumise à une électrolyse en milieu acide conduisant à la production de zinc massif.

Selon une deuxième variante, la charge 15 issue de l'étape de concentration 13 est traitée en 16 par une solution de soude concentrée à chaud en présence d'un agent oxydant spécifique.

Cet agent oxydant peut être choisi parmi les composés oxydants en milieu alcalin.

Le peroxyde d'hydrogène de l'ozone peuvent être choisis avantageusement au vu de la non contamination du milieu.

L'eau et l'oxygène sont les seuls produits obtenus après réaction de H₂O₂.

Cette étape 16 de traitement à la soude concentrée permet de dissoudre :
- la fraction du zinc qui ne serait pas engagée sous forme de spinelle ;
- la silice ;
- le plomb.

Après ce premier traitement chimique, la charge solide obtenue 17 est rincée jusqu'à neutralisation et séparée en 18 par le moyen de séparation le plus approprié.

Cette étape 18 peut être effectuée au moyen d'un filtre presse à membrane avec un dispositif de lavage à contre courant.

Le solide obtenu 19 est alors calciné en 20 à une température comprise entre 400 et 650°C dans un four à lit fluidisé pouvant admettre des boues en entrée.

Si la température de calcination n'est pas comprise dans la gamme mentionnée, des structures cristallographiques indésirables peuvent se former.

Une charge calcinée 21 est ainsi obtenue, cette charge 21 sortant sous forme de poudre, ceci évitant un broyage onéreux. Cette poudre P2 peut trouver des applications dans le domaine des pigments.

La charge calcinée 21 peut être également traitée en 22 à l'acide sulfurique moyennement concentré en présence d'une injection d'air pour oxyder le fer divalent en fer trivalent.

Cette opération peut être effectuée à chaud.

La liqueur d'attaque alcaline 23 issue du traitement à la soude 16 est chargée en zinc et en plomb.

La solution 23 est purifiée en 24 par addition de poudre de zinc 25 pour cémenter le plomb. Cette poudre de zinc peut être celle obtenue par le procédé de l'invention.

Par cémentation, l'on entend ici un dépôt par réduction dans lequel un corps métallique noble, oxydé et dissous, est réduit par un autre corps métallique ajouté à la solution sous forme de poudre. La cémentation est un procédé connu pour les métaux tels que As, Cd, Co, Cu, Pb, Ni, Sb et Sn.

Dans le cas d'une poussière brute 1 riche en plomb, selon un mode de réalisation de l'invention, l'élimination du plomb peut être réalisée par oxydation.

Ainsi, à titre d'exemple illustratif :
à un litre de solution alcaline 23 contenant 11g/l dissout de plomb sous forme de plombate, on ajoute 60 ml de peroxyde d'hydrogène à 35 % en poids par fraction successives de 20 ml.

La concentration en plombate chute de 11g/l à 5g/l puis à 0,8 g/l.

Par cette variante, il est possible :
- d'obtenir un oxyde de plomb relativement pur en vue d'une meilleure valorisation ;
- d'économiser la poudre de zinc qui ne sert pas dans cette variante à cémenter le plomb.

La solution purifiée obtenue 26 est légèrement plus concentrée en zinc est soumise à une électrolyse en 27.

Il est connu dans l'art antérieur que l'électrolyse des solutions alcalines de zinc (dissout sous forme de zincate) conduit à la formation de zinc en poudre très réactif.

En effet, ces poudres s'oxydent spontanément à l'air et sont pyrophoriques.

La manipulation de ces poudres est donc très délicate. Gorgées de soude, ces poudres doivent être abondamment rincées et passivées.

Le seul réactif donnant des résultats de passivation probants est le bichromate de sodium. Ainsi, l'électrolyse alcaline des zincates impose l'introduction de chrome VI, polluant dangereux.

Afin d'éviter les inconvénients de la formation et de la manipulation de poudre de zinc, l'électrolyse 27 est effectuée, dans l'invention, par une cellule à deux compartiments.
Le compartiment cathodique comprend une électrode en titane qui assure le contact électrique avec des billes de graphite sur lesquelles se déposera le zinc.

La cathode de graphite en grains est contenue dans un panier en contact avec une grille en titane.

La cathode de graphite en grains est contenue dans un panier en contact avec une grille en titane.

Ces billes sont posées dans un panier en polymère de maille adaptée à la granulométrie du graphite.

Dans un mode de réalisation, le polymère employé pour l'élaboration du panier est le polypropylène.

L'anode est en titane ruthénié ou iridié.

Après l'étape d'électrolyse 27, la solution enrichie en soude 28 est renvoyée en tête de procédé pour servir à l'attaque du zinc libre.

L'ensemble du compartiment cathodique (titane + graphite + zinc déposé) est immergé dans un électrolyseur dit "de régénération" du zinc contenant de l'eau déminéralisée.

Le pH de l'électrolyseur de régénération est ajusté à une valeur voisine de 5 afin d'éviter que la masse cathodique chargée de soude ne provoque une élévation de pH.

La cathode est en aluminium ou en fer.

L'ensemble du compartiment titane + graphite + zinc initialement déposé est polarisé anodiquement de manière à provoquer la dissolution du zinc.

L'électrolyse 27 conduit alors à un dépôt de zinc 29 sur les plaques métalliques de fer ou d'aluminium, par redéposition cathodique du zinc sur ces plaques formant électrode, en fer ou en acier.

Une partie de ce zinc 29 peut être utilisé dans l'étape de cémentation 24.

Le zinc obtenu 29 forme un produit directement commercialisable P3.

Après traitement alcalin 16 et thermique en 20, la charge 30 est soumise à une attaque acide sélective en 31 pour dissoudre l'oxyde de fer sans atteindre les phases ferrites de zinc.

Le produit obtenu 32 est alors lavé et séché en 33.

Le produit final 34 se compose essentiellement de ferrite de zinc dont la nuance de couleur varie selon le degré de réduction et le rapport zinc/fer. Ce produit 34, P4 peut être utilisé dans l'industrie des pigments.

La solution 35 obtenue lors de l'attaque acide 31 est réservée pour la suite du procédé.

Cette solution 35 servira à produire des oxyhydroxydes de fer par neutralisation à la soude en utilisant les eaux de lavage de la charge alcaline.

Dans un mode de réalisation, la sous-versé 7 issu de la classification hydraulique 6 est soumise à une attaque acide 36 en associant la solution 35 issue de l'attaque de la charge alcaline et un ajout d'acide neuf pour assurer la dissolution des composés ferreux.

La neutralisation contrôlée 37 de cette solution conduit à la précipitation d'un oxy-hydroxyde de fer 38 de type FeOOH.

Le produit 38 lavé et séché en 39 présente, sous sa forme finale P5 des nuances de couleurs différentes selon la température de traitement thermique.

Ce produit P5 peut être employé comme pigment pour des applications en BTP par exemple.

Le procédé et l'installation tels qu'ils viennent d'être décrit définissent au moins deux sous unités distinctes :
- une première sous-unité A dans laquelle les étapes 2 (attrition) 4 (dilution) et 6 (classification hydraulique) sont réalisées, conduisant à une surverse 10 et une sous verse 7 ;
- une deuxième sous-unité B de traitement physico chimique de la surverse 10.

Les sous-unités A et B peuvent correspondre à deux installations géographiquement distantes l'une de l'autre.

En d'autres termes, le prétraitement des poussières, par exemple sur leur lieu de captation, prétraitement correspondant à la sous verse A est dissociable d'une sous unité B de traitement physicochimique des fines de la surverse 10.

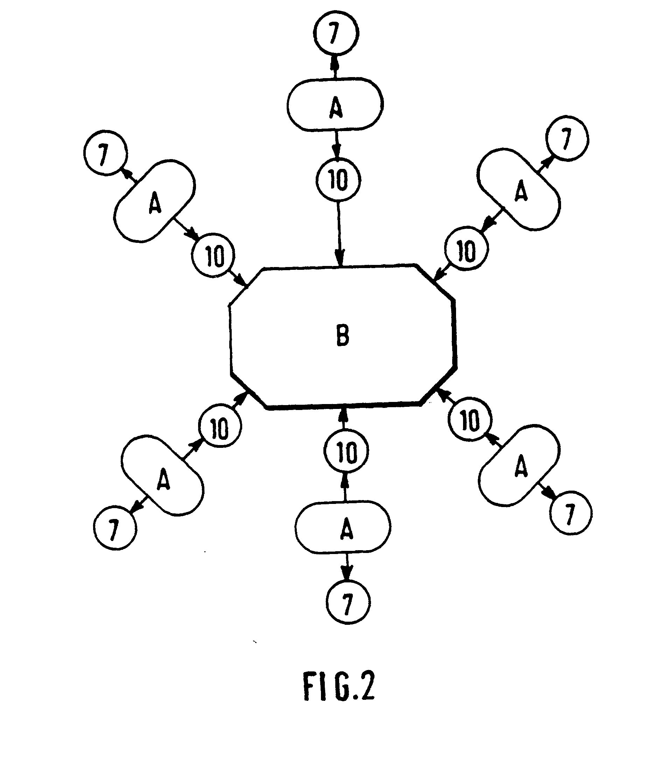

Ainsi qu'il est représenté en figure 2, une seule sous unité B peut assurer le traitement des fines de surverse issues d'une pluralité de sous unités A de prétraitement.

Le traitement physiochimique et la valorisation des fines de surverse 10 est ainsi centralisé et réalisé sur de très gros volumes, d'où une rentabilité accrue.

Le cas échéant, les eaux 14 issues de l'étape 13 de concentration peuvent être employées pour l'attrition 2 et/ou la dilution 4.

De même, dans un mode de réalisation, la sous verse 7 peut intervenir dans la dissolution des composés ferreux de la solution 35.

Les sous-unités B et A peuvent alors être géographiquement proches.

### Exemple

17 kg de poussières brutes 1 sont soumis à un attrition 2 pendant 15 mn dans 7 litres d'eau.

Après attrition 2, la charge 3 est diluée en 4 dans 120 litres d'eau puis soumise à une classification hydraulique 6 à travers un cyclone effectuant une coupure à 5 microns.

L'évalutation de la répartition granulométrique montre deux amas centrés :
- sur 5 microns pour la fraction la plus fine (surverse 10). L'analyse par microsopie électronique à balayage de cette phase montre une morphologie de poudre homogène très fine. Cette phase 10 est très riche en zinc dont la concentration peut attendre 30 %.
- sur 100 microns pour le refus 7 qui constitue 14 % de la charge entrante 1. L'analyse par microsopie électronique à balayage de cette phase 7 montre la présence de billes de forme régulière dont la teneur en fer est importante (80 %). Cette phase 7 ne renferme que 6 % de zinc.

Après séparation solide-liquide, l'eau est soumise à un traitement de dépollution.
100 litres d'eau 10 sont traités au moyen de 4,5 g de 2,5 dimercapto thiadiazole.

Après agitation d'une heure, un floculent est ajouté et la solution est filtrée à travers un filtre presse.

L'analyse montre que les éléments comme le zinc, le plomb, le mercure et la cadmium sont à une concentration inférieure à 0,05 mg/l.

La solution claire est soumise à un traitement sur osmose inverse pour obtenir une saumure à 90g/l et une eau 14 de qualité industrielle réutilisable aux étapes 2 et 4 du procédé notamment.

200 kg de la charge 15 sont soumis à une lixiviation basique 16 au moyen de soude à 30 % en poids, pendant 30 minutes à une température de 90°C.

Après filtration, la fraction solide 17 est lavée jusqu'à neutralisation puis séchée et calcinée en 20 à une température de 400°C pendant 4 heures.

Le produit P2, 21 obtenu trouve déjà des applications par exemple comme charge additionnelle dans les pigments à base d'oxydes de fer.

La charge solide débarassée des métaux lourds et sels solubles est traitée à l'acide sulfurique de concentration comprise entre 5 et 18 % pendant 2 heures à 60°C. Pendant toute la durée de la réaction, de l'air ou de l'oxygène sont injectés à la base du réacteur d'attaque.

Le solide 34, P4 obtenu répond aux caractéristiques de la nomenclature des pigments à base d'oxydes de fer.

La solution 35 issue du traitement à l'acide 31 peut être traitée selon le procédé décrit dans le brevet FR 2 737 503, par neutralisation 37, à 60°C jusqu'à un pH de 5,4 tout en maintenant un barbotage d'air à 600 l/h.

Le précipité obtenu 38 est lavé et séché à 250°C dans un sécheur à air circulant.

## Revendications

1. Procédé de traitement de poussières d'aciéries en vue de la récupération des éléments valorisables, ledit procédé comportant une attrition dans l'eau (2) suivie d'un classement hydraulique (6) de la charge (5) ainsi obtenue, ledit classement hydraulique (6) étant effectué à travers un cyclone de coupure adaptée de sorte à obtenir une surverse (10) riche en zinc et une sous-verse (7) riche en fer, ledit procédé étant **caractérisé en ce qu'**il comporte en outre :
- un lavage (11), après séparation solide-liquide, de la charge recueillie à la surverse (10) issue du classement hydraulique (6), ladite charge étant chargée de sels et métaux lourds dissous, en vue de séparer les fractions salines hydrosolubles des oxydes insolubles,
- un traitement à chaud (16), du type lixiviation, de la totalité de la charge, lavée dans l'étape de lavage (11) précédente sans séparation magnétique préalable, en vue d'éliminer les métaux sous forme d'oxydes libres comme le zinc et le plomb,
- un traitement par voie thermique (20) de la charge (17), obtenue après traitement à chaud (16), à une température comprise entre 240 et 800°C,
- une étape de purification et d'extraction du zinc de la solution (23) obtenue après traitement à chaud (16).

2. Procédé selon la revendication 1, **caractérisé en ce que** une étape de traitement par de l'acide sulfurique (22) de concentration comprise entre 5 et 8% est réalisée après le traitement par voie thermique (20).

3. Procédé selon l'une des revendications précédentes, **caractérisé en ce que** le traitement à chaud (16) effectué après l'étape de lavage (11) est réalisé en milieu acide.

4. Procédé selon la revendication 3, **caractérisé en ce que** le traitement à chaud en milieu acide est effectué dans une solution d'acide sulfurique à une concentration comprise entre 8 et 18 % et une température comprise entre 40 et 95°C.

5. Procédé selon la revendication 3, **caractérisé en ce que** l'étape de traitement à chaud (16) est suivie d'une oxydation puis d'une séparation du fer sous forme d'un précipité d'oxyde insoluble.

6. Procédé selon la revendication 1 ou 2, **caractérisé en ce que** le zinc est séparé au moyen d'une électrolyse acide.

7. Procédé selon la revendication 1 ou 2, **caractérisé en ce que** le traitement à chaud (16) est effectué dans une solution de soude concentrée à chaud en présence d'un agent oxydant, la concentration de la solution de soude étant comprise entre 240 et 400 g/l, et la température du traitement alcalin (16) étant comprise entre 50 et 110°C.

8. Procédé selon la revendication 7, **caractérisé en ce que** l'agent oxydant est choisi parmi les composés oxydants en milieu alcalin tel que le peroxyde d'hydrogène.

9. Procédé selon la revendication 8, **caractérisé en ce que** la concentration de peroxyde d'hydrogène est comprise entre 10 et 40%.

10. Procédé selon la revendication 8 ou 9, **caractérisé en ce que** la concentration en peroxyde d'hydrogène est comprise entre 30 et 35%, le plomb contenu dans la solution alcaline (23) étant éliminé au moyen de peroxyde d'hydrogène de concentration égale au minimum à 35 % en poids.

11. Procédé selon l'une quelconque des revendications 1 à 10, **caractérisé en ce que** le traitement par voie thermique (20) est effectué entre 400 et 650°C.

12. Procédé selon l'une quelconque des revendications 2 à 11, **caractérisé en ce que** le traitement à l'acide sulfurique (22) est réalisé à chaud à une température comprise entre 40 et 80°C.

13. Procédé selon l'une quelconque des revendications 2 à 12, **caractérisé en ce que** la solution issue du traitement acide est ajustée à un pH compris entre 5,4 et 10.

14. Procédé selon l'une quelconque des revendications 2 à 13, **caractérisé en ce que** la solution issue du traitement acide est ajustée à une température comprise entre 25 et 80°C.

15. Procédé selon l'une quelconque des revendications 2 à 14, **caractérisé en ce que** la solution issue du traitement acide est purifiée au moyen de poudres de zinc ou de fer.

16. Procédé selon l'une quelconque des revendications 7 à 15, **caractérisé en ce qu'**il comporte en outre une électrolyse en deux étapes (27) de la solution (26) issue du traitement alcalin (16).

17. Procédé selon la revendication 16, **caractérisé en ce que** la première électrolyse consiste en une réduction de zinc en milieu basique concentré.

18. Procédé selon la revendication 17, **caractérisé en ce que** ladite première électrolyse met en oeuvre une cathode de graphite en grains contenus dans un panier en contact avec une grille en titane.

19. Procédé selon la revendication 18, **caractérisé en ce que** le panier est réalisé en polypropylène.

20. Procédé selon l'une quelconque des revendications 16 à 19, **caractérisé en ce que** l'anode est en titane ruthénié ou iridié.

21. Procédé selon l'une quelconque des revendications 16 à 20, **caractérisé en ce que** la seconde électrolyse comporte une redissolution anodique des cathodes de graphite dans une solution de sulfate de sodium et une redéposition cathodique du zinc sur une électrode en fer ou en acier.

22. Procédé selon la revendication 21, **caractérisé en ce que** la seconde électrolyse est réalisée dans un électrolyseur dont le pH est ajusté à une valeur voisine de 5.

## Claims

1. A method for processing steelworks dust with a view to the recovery of recyclable components, the said method comprising attrition in water (2) followed by hydraulic classification (6) of the charge (5) thus obtained, the said hydraulic classification (6) being performed through a cyclone with a cutoff adapted so as to obtain an overflow (10) with a high zinc content and an underflow (7) with a high iron content, the said method being **characterised in that** it also comprises:
- a washing (11), after solid/liquid separation, of the charge collected at the overflow (10) issuing from the hydraulic classification (6), the said charge containing dissolved salts and heavy metals, with a view to separating the water-soluble saline fractions from the insoluble oxides,
- a hot treatment (16), of the leaching type, of the entire charge, washed in the previous washing step (11) without prior magnetic separation, with a view to removing the metals in the form of free oxides such as zinc and lead,
- a heat treatment (20) of the charge (17), obtained after hot treatment (16), at a temperature of between 240° and 800°C,
- a step of purification and extraction of the zinc from the solution (23) obtained after hot treatment (16).

2. A method according to Claim 1, **characterised in that** a step of treatment with sulphuric acid (22) with a concentration of between 5% and 8% is carried out after the heat treatment (20).

3. A method according to one of the preceding claims, **characterised in that** the hot treatment (16) carried out after the washing step (11) is performed in an acid medium.

4. A method according to Claim 3, **characterised in that** the hot treatment in an acid medium is carried out in a solution of sulphuric acid at a concentration of between 8% and 18% and a temperature of between 40° and 95°C.

5. A method according to Claim 3, **characterised in that** the hot treatment step (16) is followed by an oxidation and then a separation of the iron in the form of an insoluble oxide precipitate.

6. A method according to Claim 1 or 2, **characterised in that** the zinc is separated by means of an acid electrolysis.

7. A method according to Claim 1 or 2, **characterised in that** the hot treatment (16) is performed in a solution of hot concentrated soda with an oxidising agent present, the concentration of the soda solution being between 240 and 400 g/l, and the temperature of the alkaline treatment (16) being between 50° and 110°C.

8. A method according to Claim 7, **characterised in that** the oxidising agent is chosen from amongst the oxidising compounds in an alkaline medium such as hydrogen peroxide.

9. A method according to Claim 8, **characterised in that** the concentration of hydrogen peroxide is between 10% and 40%.

10. A method according to Claim 8 or 9, **characterised in that** the concentration of hydrogen peroxide is between 30% and 35%, the lead contained in the alkaline solution (23) being removed by means of hydrogen peroxide with a concentration of a minimum of 35% by weight.

11. A method according to any one of Claims 1 to 10, **characterised in that** the heat treatment (20) is carried out at between 400° and 650°C.

12. A method according to any one of Claims 2 to 11, **characterised in that** the treatment with sulphuric acid (22) is performed hot at a temperature of between 40° and 80°C.

13. A method according to any one of Claims 2 to 12, **characterised in that** the solution issuing from the acid treatment is adjusted to a pH of between 5.4 and 10.

14. A method according to any one of Claims 2 to 13, **characterised in that** the solution issuing from the acid treatment is adjusted to a temperature of between 25° and 80°C.

15. A method according to any one of Claims 2 to 14, **characterised in that** the solution issuing from the acid treatment is purified by means of zinc or iron powders.

16. A method according to any one of Claims 7 to 15, **characterised in that** it also comprises a two-step electrolysis (27) of the solution (26) issuing from the alkaline treatment (16).

17. A method according to Claim 16, **characterised in that** the first electrolysis consists of a reduction of zinc in a concentrated basic medium.

18. A method according to Claim 17, **characterised in that** the said first electrolysis uses a graphite cathode with grains contained in a basket in contact with a titanium grille.

19. A method according to Claim 18, **characterised in that** the basket is produced from polypropylene.

20. A method according to any one of Claims 16 to 19, **characterised in that** the anode is made from titanium containing ruthenium or iridium.

21. A method according to any one of Claims 16 to 20, **characterised in that** the second electrolysis comprises an anodic redissolution of the graphite cathodes in a sodium sulphate solution and a cathodic redeposition of the zinc on an iron or steel electrode.

22. A method according to Claim 21, **characterised in that** the second electrolysis is carried out in an electrolyser whose pH is adjusted to a value of around 5.

## Patentansprüche

1. Behandlungsverfahren von Stahlwerkstaub für die Rückgewinnung von verwertbaren Elementen, wobei das besagte Verfahren ein Aneinanderreiben in Wasser (2), gefolgt von einer hydraulischen Klassierung (6) der so erhaltenen Charge (5) umfasst, wobei die besagte hydraulische Klassierung (6) über einen geeigneten Klassierzyklon erfolgt, um einen zinkreichen Überlauf (10) und einen eisenreichen Unterlauf (7) zu erhalten, wobei das besagte Verfahren **dadurch gekennzeichnet ist, dass** es ferner umfasst:
- ein Waschen (11) nach der Feststoff/Flüssigkeitstrennung der im Überlauf (10) aus der hydraulischen Klassierung (6) gesammelten Charge, wobei die besagte Charge mit aufgelösten Salzen und Schwermetallen geladen ist, um die wasserlöslichen Salzfraktionen von den unlöslichen Oxiden zu trennen,
- eine Wärmebehandlung (16) des Typs Laugung der gesamten, in der vorangehenden Waschetappe (11) gewaschenen Charge, ohne vorherige magnetische Trennung, um die Metalle in Form von freien Oxiden wie Zink und Blei auszuscheiden,
- eine weitere Wärmebehandlung (20) der nach der Wärmebehandlung (16) erhaltenen Charge (17) bei einer Temperatur zwischen 240 und 800°C,
- eine Reinigungs- und Extraktionsetappe des Zinks aus der nach der Wärmebehandlung (16) erhaltenen Lösung (23).

2. Verfahren nach Anspruch 1, **dadurch gekennzeichnet, dass** auf die Wärmebehandlung (20) eine Behandlungsetappe mit Schwefelsäure (22) mit einer Konzentration von 5 bis 8% folgt.

3. Verfahren nach einem der vorangehenden Ansprüche, **dadurch gekennzeichnet, dass** die auf die Waschetappe (11) folgende Wärmebehandlung (16) in saurem Milieu durchgeführt wird.

4. Verfahren nach Anspruch 3, **dadurch gekennzeichnet, dass** die Wärmebehandlung in saurem Milieu in einer Schwefelsäurelösung mit einer Konzentration von 8 bis 18% und bei einer Temperatur von 40 bis 95°C durchgeführt wird.

5. Verfahren nach Anspruch 3, **dadurch gekennzeichnet, dass** auf die Wärmebehandlungsetappe (16) eine Oxidierung und dann eine Trennung des Eisens in Form eines unlöslichen Oxidniederschlags folgt.

6. Verfahren nach Anspruch 1 oder 2, **dadurch gekennzeichnet, dass** das Zink mittels einer sauren Elektrolyse getrennt wird.

7. Verfahren nach Anspruch 1 oder 2, **dadurch gekennzeichnet, dass** die Wärmebehandlung (16) in einer warm konzentrierten Sodalösung in Gegenwart eines Oxidierungsmittels erfolgt, wobei die Konzentration der Sodalösung zwischen 240 und 400 g/l liegt und die Temperatur der Alkalibehandlung (16) zwischen 50 und 110°C beträgt.

8. Verfahren nach Anspruch 7, **dadurch gekennzeichnet, dass** das Oxidierungsmittel unter den in Alkalimilieu oxidierenden Verbindungen wie Wasserstoffperoxid gewählt wird.

9. Verfahren nach Anspruch 8, **dadurch gekennzeichnet, dass** die Konzentration des Wasserstoffperoxids zwischen 10 und 40% beträgt.

10. Verfahren nach Anspruch 8 oder 9, **dadurch gekennzeichnet, dass** die Konzentration des Wasserstoffperoxids zwischen 30 und 35% beträgt, wobei das in der Alkalilösung (23) enthaltene Blei mittels Wasserstoffperoxid mit einer Konzentration von mindestens 35 Gew.-% ausgeschieden wird.

11. Verfahren nach einem der Ansprüche 1 bis 10, **dadurch gekennzeichnet, dass** die Wärmebehandlung (20) zwischen 400 und 650°C erfolgt.

12. Verfahren nach einem der Ansprüche 2 bis 11, **dadurch gekennzeichnet, dass** die Schwefelsäurebehandlung (22) bei einer Temperatur zwischen 40 und 80° warm erfolgt.

13. Verfahren nach einem der Ansprüche 2 bis 12, **dadurch gekennzeichnet, dass** die sich aus der Säurebehandlung ergebende Lösung auf einen pH zwischen 5,4 und 10 eingestellt wird.

14. Verfahren nach einem der Ansprüche 2 bis 13, **dadurch gekennzeichnet, dass** die sich aus der Säurebehandlung ergebende Lösung auf eine Temperatur zwischen 25 und 80°C eingestellt wird.

15. Verfahren nach einem der Ansprüche 2 bis 14, **dadurch gekennzeichnet, dass** die sich aus der Säurebehandlung ergebende Lösung mittels Zink- oder Eisenpulver gereinigt wird.

16. Verfahren nach einem der Ansprüche 7 bis 15, **dadurch gekennzeichnet, dass** es ferner eine Elektrolyse in zwei Etappen der sich aus der Alkalibehandlung (16) ergebenden Lösung umfasst.

17. Verfahren nach Anspruch 16, **dadurch gekennzeichnet, dass** die erste Elektrolyse in einer Zinkreduzierung in konzentriertem basischem Milieu besteht.

18. Verfahren nach Anspruch 17, **dadurch gekennzeichnet, dass** die besagte erste Elektrolyse eine Graphitkathode aus Körnern verwendet, die in einem mit einem Titangitter in Kontakt stehenden Korb enthalten sind.

19. Verfahren nach Anspruch 18, **dadurch gekennzeichnet, dass** der Korb aus Polypropylen besteht.

20. Verfahren nach einem der Ansprüche 16 bis 19, **dadurch gekennzeichnet, dass** die Anode aus ruthenium- oder iridiumhaltigem Titan besteht.

21. Verfahren nach einem der Ansprüche 16 bis 20, **dadurch gekennzeichnet, dass** die zweite Elektrolyse eine anodische Wiederauflösung der Graphitkathoden in einer Natriumsulfatlösung und eine kathodische Wiederablagerung des Zinks auf einer Elektrode aus Eisen oder Stahl umfasst.

22. Verfahren nach Anspruch 21, **dadurch gekennzeichnet, dass** die zweite Elektrolyse in einem Elektrolyseur erfolgt, dessen pH auf einen Wert von etwa 5 eingestellt wird.
